**Europäisches Patentamt**

**European Patent Office**

**Office européen des brevets**

(11) Numéro de publication: **0 072 324**
**A1**

# (12) DEMANDE DE BREVET EUROPEEN

(21) Numéro de dépôt: **82401480.7**

(22) Date de dépôt: **05.08.82**

(51) Int. Cl.³: **A 01 B 51/04, A 01 B 73/00**

(30) Priorité: **07.08.81 FR 8115398**
**21.07.82 FR 8212723**

(43) Date de publication de la demande: **16.02.83**
**Bulletin 83/7**

(84) Etats contractants désignés: **AT DE GB NL SE**

(71) Demandeur: **Grudet, François, La Lucate,
F-40160 Sanguinet (FR)**
Demandeur: **Van de Velde, Jean, Clos Lagrange Rue
Amiral Gayrol, F-40000 Mont de Marsan (FR)**

(72) Inventeur: **Grudet, François, La Lucate,
F-40160 Sanguinet (FR)**
Inventeur: **Van de Velde, Jean, Clos Lagrange Rue
Amiral Gayrol, F-40000 Mont de Marsan (FR)**

(74) Mandataire: **Rodhain, Claude, Cabinet Claude
RODHAIN 30, rue La Boétie, F-75008 Paris (FR)**

(54) **Châssis porte-outils destinés au travail ou au traitement du sol.**

(57) Châssis porte-outils caractérisé par un dispositif d'accouplement constitué d'une potence comprenant un bras principal (14) pourvu d'une chape articulée (20) comportant des moyens d'attelage (22) avec le système de revelage du tracteur, ce bras étant prolongé par une fourche dont chacune des branches (15₁–15₂) comporte des paliers (16 ou 16₁) ouverts vers le haut dans lesquels sont susceptibles de venir se loger des tourillons (28 ou 28₁) fixés au extrémités de chacune des traverses (2–2₁), (ou inversement), ces paliers (16 et 16₁) comportant des orifices (18) pour le passage des broches de verouillage (19).

EP 0 072 324 A1

Châssis porte-outils destinés au travail ou au traitement du sol.

L'invention concerne un châssis porte-outils à vocation agricole, destiné à être attelé à un véhicule tracteur, et conçu pour pouvoir recevoir au moins deux séries différentes d'outils standards, fixés de façon homogène sur le châssis pour répartir les charges et efforts appliqués sur les bras de relevage du tracteur, ledit châssis étant facilement transportable sur route.

On connaît déjà de tels châssis appelés aussi barres porte-outils, constitués essentiellement (comme décrit dans le brevet français n° 75 19 627 / 2 314 651, du 17 juin 1975, et dans le certificat d'addition n° 77 13 622 / 2 388 475, au nom du déposant) de longerons en forme de poutre, reliés entre eux par des traverses, de position réglable, portant des attelages trois-points pour la fixation de séries d'outils standards tels que semoirs, cultivateurs, billonneurs, enfouisseurs d'engrais, vibroculteurs ou autres, ce châssis étant accouplé à l'avant de l'attelage trois-points d'un tracteur par le jeu d'une platine articulée, réglable en hauteur, et étant supporté à l'arrière par des roues orientables montées chacune sur un système de parallélogramme déformable commandé par vérin et relié aux longerons du châssis, les bras formant lesdits parallélogrammes étant orientés dans le plan des longerons, lequel correspond au sens de déplacement du châssis en position de travail.

Ainsi, les outils suspendus aux traverses peuvent, soit être amenés en position de travail, en contact avec le sol, lorsque les vérins sont déployés, soit être relevés ou escamotés (position de transport sur route) lorsque les vérins sont rétractés et que les roues porteuses sont ramenées en direction des traverses.

Il est également connu, dans ce type de barres porte-outils, de régler la hauteur de travail des outils soit en agissant sur les vérins des parallélogrammes déformables, comme indiqué ci-dessus, soit en relevant les bras d'attelage du tracteur, soit encore en jouant sur les deux systèmes de réglage.

Il est enfin connu de doter le châssis, en plus des roues arrière porteuses orientables, de roues supplémentaires situées sur le côté de la traverse avant accouplée au tracteur, de manière à ce que ledit châssis soit ainsi porté par quatre roues orientables symétriquement réparties sous le châssis. Grâce à l'orientation des roues, le châssis peut être déplacé dans deux plans orthogonaux, l'un correspondant au sens de déplacement sur l'aire de travail (position opérationnelle), l'autre dans un plan perpendiculaire correspondant au déplacement du châssis en position de transport sur route.

Dans le premier cas, (position de travail), les traverses étant orientées dans un plan transversal, perpendiculaire au sens de déplacement du tracteur, et le châssis étant accouplé au système trois-points de relevage dudit tracteur, les deux roues supplémentaires situées sur la traverse avant sont relevées et le châssis est semi-porté sur les deux roues prolongeant la traverse arrière.

Dans le second cas, (position route), le déplacement du châssis se fait dans un plan parallèle à celui des traverses, par pivotemen de 90° des roues porteuses et par l'orientation du tracteur dans un plan perpendiculaire à celui qu'il occupait dans la position de travail. L'assemblage desdites traverses avec le système de relevage du tracteur, se fait par l'intermédiaire d'une barre d'accouplement, et le châssis peut alors être tiré ou semi-porté, les deux roues situées de part et d'autre des deux traverses, à proximité du tracteur, étant dans ce cas relevées.

L'inconvénient majeur de ces barres porte-outils réside dans le fait que, s'agissant de traverses de longue portée, par exemple de douze mètres (ce qui est fréquemment le cas, notamment lorsque l'on utilise trois semoirs de quatre mètres chacun), le châssis pesant plusieurs tonnes avec ses outils nécessite, en vue de son relevage et même de sa traction, l'emploi d'une barre d'accouplement résistante et de forte section dont le poids est tel qu'elle ne peut pas être manoeuvrée par un seul opérateur. De ce fait, le préposé n'est pas autonome et doit en fin de travail, avoir recours à de l'aide extérieure ou utiliser un engin de levage, ce qui est incompatible avec le travail sur de vastes exploitations agricoles éloignées de toute aide mécanique ou manuelle.

L'invention concerne donc un châssis ou une barre porte-outils, même de fort gabarit, du type précité, pourvu d'un dispositif d'accouplement amovible dont la conception est telle qu'il peut être aisément assemblé par un seul homme, aussi bien au châssis qu'au tracteur, à l'endroit et au moment où il faut convertir l'engin agricole en véhicule routier, et ce, sans faire appel à un quelconque appareil de levage.

L'invention concerne donc un châssis porte-outils destiné au travail ou au traitement du sol, du type comprenant des longerons assemblés entre eux par des traverses de position réglable, au moins l'une de ces traverses comportant des systèmes d'attelage pour la fixation suspendue d'outils standards susceptibles de prendre au moins deux positions, l'une de travail en contact avec le sol, l'autre escamotée pour le déplacement du châssis sur route, ledit châssis étant supporté par des roues orientables et pouvant être accouplé à un tracteur dans deux plans orthogonaux, l'un perpendiculaire aux traverses correspondant au sens de déplacement du châssis en position de travail, l'autre dans le plan des traverses correspondant à la position de transport, un dispositif d'accouplement amovible étant, dans ce dernier cas, prévu pour atteler les traverses au tracteur, châssis caractérisé en ce que le dispositif d'accouplement est constitué d'une potence comprenant un bras principal pourvu d'une chape articulée, comportant des moyens d'attelage avec le système de relevage du tracteur, ce bras étant prolongé par une fourche dont chacune des branches comporte des paliers ouverts vers le haut dans lesquels sont susceptibles de venir se loger des tourillons fixés aux extrémités de chacune des traverses, ou inversement, ces paliers comportant des orifices pour le passage de broches de verrouillage, ce qui permet d'accoupler aisément les traverses du châssis au tracteur par simple attelage manuel du bras de la potence au système trois-points dudit tracteur, après quoi on procède au relevage de ladite potence, pour amener les paliers en regard des tourillons des traverses, en agissant sur ledit système de relevage.

Suivant une caractéristique de l'invention, la fourche est montée oscillante dans un plan transversal sur l'axe passant par le plan longitudinal du bras principal, ce qui permet un débattement transversal du châssis permettant aux roues porteuses de suivre la topographie du terrain.

Suivant une autre caractéristique de l'invention, les paliers ouverts sont constitués de tronçons de profilés à section en U, soudés sur la face supérieure de chacune des deux branches de la potence, l'écart entre lesdites branches étant sensiblement égal à la largeur comprise entre les deux traverses du châssis, les tourillons étant soudés sur la face latérale desdites traverses pour être situés sur le trajet des paliers lors du déplacement ascensionnel de la potence lorsqu'elle est relevée par le système trois-points du tracteur.

- 4 -

D'autres caractéristiques et avantages de l'invention ressortiront de la description ci-après et des dessins annexés, donnés à titre d'exemples non limitatifs, dans lesquels :

- La Fig. 1 est une vue latérale du châssis porte-outils selon l'invention, attelé à un véhicule tracteur ;

- La fig. 2 est une vue de dessus de la Fig. 1, le châssis étant en position opérationnelle sur l'aire de travail ;

- La fig. 3 est une vue de dessus montrant le châssis porte-outils de la Fig. 2, attelé à un véhicule tracteur, dans la position de transport sur route ;

- La fig. 4 est une vue en perspective montrant le détail de la potence d'accouplement entre le châssis porte-outils et le véhicule tracteur.

- La figure 5 est une vue en perspective éclatée d'une variante de réalisation comprenant, en plus de la potence d'attelage, une platine d'attelage automatique.

Le châssis porte-outils est constitué de façon usuelle d'au moins deux longerons 1 parallèles entre eux, et réunis par au moins deux traverses de grande portée 2, fixées auxdits longerons par des brides et boulons, lesdites traverses pouvant être fixées en toute position relative par rapport à ces longerons, selon les dimensions et l'encombrement des outils suspendus à ces traverses. En effet, les traverses constituent des barres porte-outils de type standard, tels que des semoirs, des cultivateurs, des vibroculteurs, des enfouisseurs d'engrais ou autres dispositifs destinés au travail ou à l'enrichissement du sol. Ces outils sont fixés sur les traverses par le jeu de brides et de boulons 3, réglables en position, ces organes de fixation supportant des systèmes d'attache trois points 4 comparables à ceux équipant les tracteurs, les outils 5 étant susceptibles de compenser ou d'absorber les dénivellations du terrain, en raison de ce que les deux points inférieurs du système trois points comportent un trou ovalisé dans le sens vertical, permettant un certain débattement des outils dans le sens transversal.

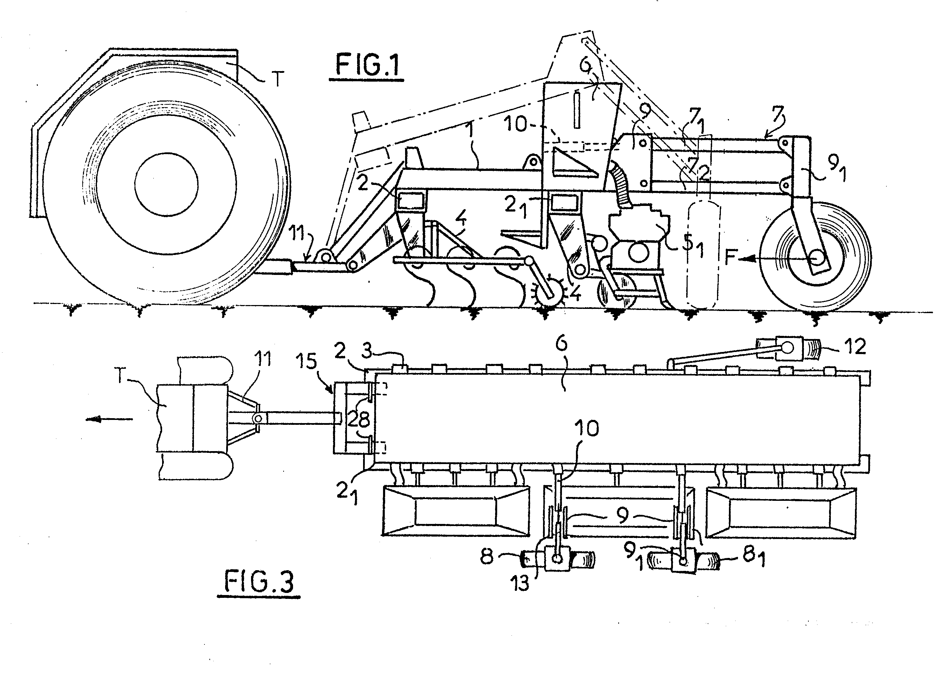

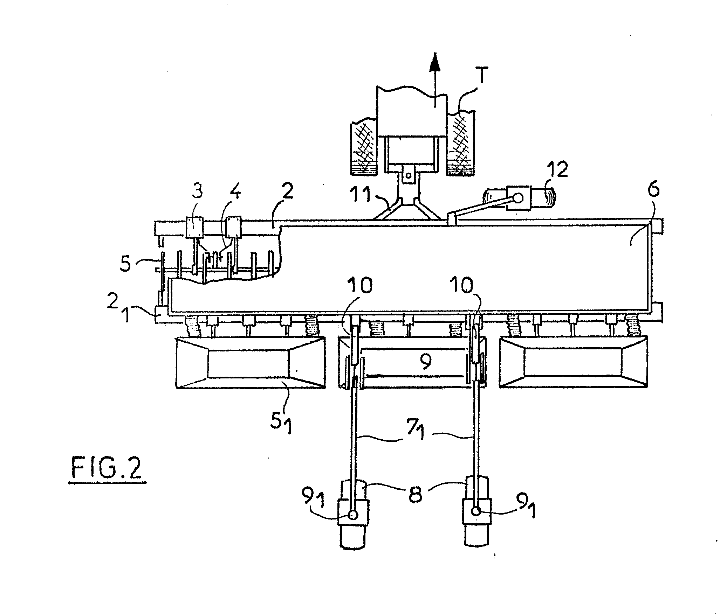

Chaque traverse 2 supporte une série d'outils standards qui peut varier d'une traverse à l'autre, les outils ayant dans ce cas des fonctions complémentaires. Par exemple, et comme illustré en Fig.2, les outils 5 portés par la traverse 2 située à proximité du tracteur T peuvent être des cultivateurs, tandis que les outils $5_1$ portés par la seconde

traverse $2_1$ peuvent être des semoirs, indépendants et autonomes, répartis sur toute la largeur de la traverse $2_1$, ces semoirs étant alimentés par une trémie 6 dans laquelle sont stockés les semailles ou engrais à épandre, ladite trémie de stockage étant supportée par le châssis porte-outils, comme illustré en Fig. 1.

Toujours de façon usuelle, les longerons 1 sont prolongés vers l'arrière par des systèmes à parallélogrammes déformables 7, supportés par deux roues orientables 8, chaque parallélogramme étant constitué de deux bras parallèles $7_1$-$7_2$ réunis à leurs deux extrémités, respectivement par une console 9 et une chape support de roues $9_1$. Le parallélogramme déformable 7 est relié à un vérin 10 permettant, comme indiqué dans le brevet français 75 19 627, d'amener les outils 5 et $5_1$ en position opérationnelle, (comme illustré en traits pleins sur la Fig. 1), ou en position escamotée (position de transport) par déformation du parallélogramme déformable 7 et déplacement des roues porteuses 8 en direction du châssis porte-outils (flèche F) comme illustré en traits mixtes sur cette même Fig. 1.

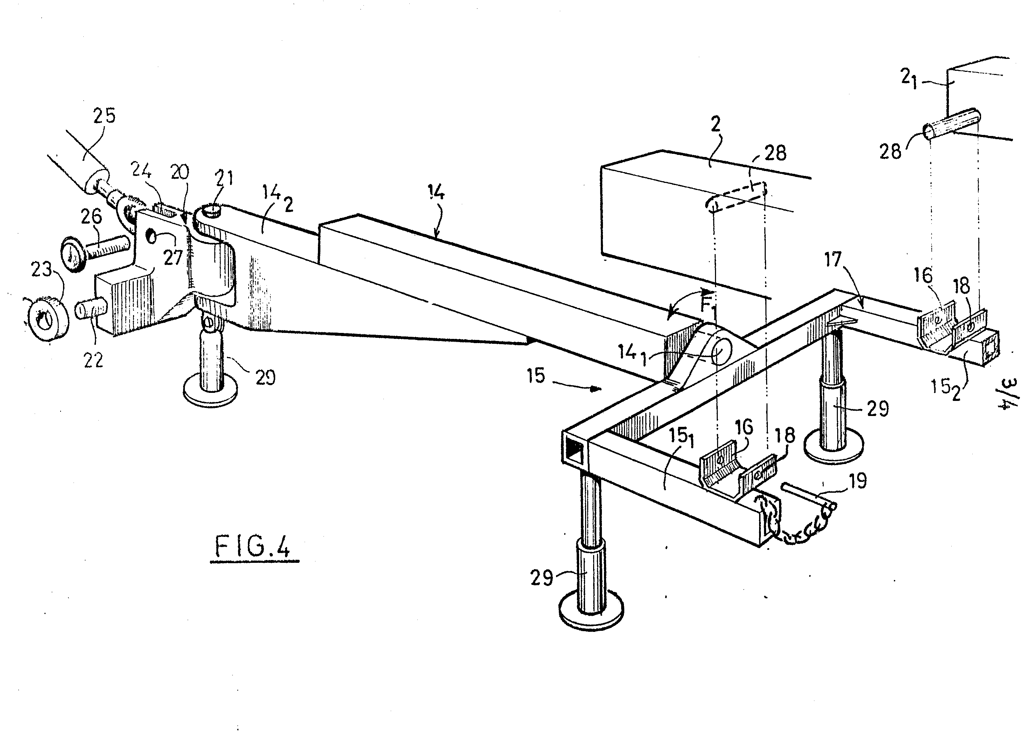

Partant de cette structure connue, l'originalité de l'invention réside plus particulièrement dans le dispositif d'accouplement permettant de convertir l'engin agricole en engin routier, les Fig. 2 et 3 illustrant respectivement le châssis porte-outils en position opérationnelle de travail et en position de transport sur route. Dans le cas de la Fig. 2, le sens de déplacement du tracteur T est perpendiculaire au plan des traverses 2, et la traverse la plus proche du tracteur est accouplée au dispositif d'attelage 11 dudit tracteur pour être semi-portée. Dans cette position de travail, la roue additionnelle 12, située sur le côté de la traverse 2, au voisinage du tracteur, est repliée contre ladite traverse et escamotée afin de ne pas être en contact avec le sol, le polygone de sustentation du châssis porte-outils étant déterminé par le triangle formé par les deux roues arrière porteuses 8 et la fixation 11 du tracteur.

Dans la position illustrée en Fig. 3, (transport sur route), le tracteur a pivoté de 90° et a quitté les longerons 1 pour venir se mettre dans l'alignement des traverses 2 et $2_1$, les deux roues porteuses arrière $8$-$8_1$ ayant également pivoté à angle droit pour venir dans un plan parallèle à la traverse $2_1$. Par ailleurs, on a réduit la largeur de l'engin en ramenant les bras $7_1$-$7_2$ du parallélogramme 7 en direction de la traverse $2_1$ (comme illustré en traits mixtes en Fig. 1), ces traverses 2 et $2_1$ étant attelées au véhicule tracteur T par le même dispositif d'attelage 11 à l'aide de la potence illustrée en Fig. 4. Là encore le châssis porte-outils est dans cette position de transport, semi-portée, puisqu'il est attelé à l'avant du tracteur T, et supporté à l'arrière par les deux roues $8_1$ et 12 (Fig. 3), la roue avant 8 étant relevée.

La potence illustrée en Fig. 4 est constituée d'un bras principal 14 prolongé à l'arrière par une fourche 15 dont chacun des deux bras $15_1$ et $15_2$ est pourvu de paliers ouverts ou chapes 16, soudés sur la face supérieure 17 desdites branches, ces paliers étant constitués de tronçons de profilés à section en U, dont les deux ailes verticales sont pourvues d'orifices 18 permettant le passage de broches de verrouillage 19. La fourche est montée oscillante dans un plan transversal (flèche $F_1$), par emboîtement et fixation axiale sur l'extrémité cylindrique $14_1$ du bras 14, cette portion d'axe de section circulaire servant de tourillon à la fourche 15 qui bénéficie ainsi d'un débattement dans un plan transversal, perpendiculaire au plan longitudinal du bras 14.

L'autre extrémité du bras 14 est pourvue d'une chape 20 d'accouplement avec le tracteur, celle-ci étant montée articulée sur un axe vertical 21 traversant l'extrémité $14_2$ du bras 14, ladite chape comportant en outre deux axes pivots 22 sur lesquels viennent s'articuler les bras d'attelage 23 du système trois-points du tracteur et une fente 24 dans laquelle vient se fixer le bras de relevage 25 dudit système trois-points, par le jeu d'un axe d'assemblage 26 venant s'insérer dans les orifices 27 traversant la chape 20.

Les deux traverses 2 et $2_1$ comportent, quant à elles, sur leurs parois latérales internes, des doigts 28 formant tourillons, ceux-ci étant situés sur le trajet des paliers ouverts 16 de la potence, de manière à venir s'insérer dans lesdits paliers lors du déplacement ascensionnel de la potence, sous l'effet du relevage trois-points du tracteur. En effet, la largeur des deux bras $15_1$ - $15_2$ de la fourche de la potence est sensiblement égale à l'écart existant entre les deux traverses 2 et $2_1$ pour permettre une parfaite concordance entre les paliers 16 et les tourillons 28. Enfin, la potence comporte, par ailleurs, des pieds escamotables 29 formant un triangle de sustentation surélévant la potence.

L'opérateur peut ainsi, lorsqu'il a terminé son travail, procéder lui-même au désaccouplement du tracteur pour l'amener de la position illustrée en Fig. 2 à la position illustrée en Fig. 3. L'attelage du châssis porte-outils, dans la position illustrée en Fig. 3, se fait de façon simple en reliant, dans un premier temps, la chape 20 au système trois-points du tracteur, c'est-à-dire en enfilant les bras d'attelage 23 sur les tourillons 22 et en faisant pénétrer le bras de relevage 25 dans la fente 24 afin de le verrouiller par l'axe 26. A ce stade, le préposé agit sur le système de relevage du tracteur, ce qui a pour effet, dans un premier temps, de faire légèrement pivoter vers le haut l'extrémité arrière de la potence, c'est-à-dire la partie fourchue, pour la positionner en regard des deux traverses 2 et $2_1$. Lorsque le positionnement est correct, le préposé poursuit le déplacement ascensionnel de la potence jusqu'à ce que les tourillons 28 viennent prendre place dans les chapes 16, après quoi il suffit d'introduire dans les orifices 18 les broches de verrouillage 19 pour que la potence soit ainsi rendue solidaire du châssis porte-outils. Durant cette opération de relevage de la potence, les pieds 29 se sont escamotés, soit par repliement, soit de façon télescopique, et le châssis est ainsi prêt à être transporté sous son plus faible encombrement, en étant porté à l'arrière par les roues $8_1$ et 12, et à l'avant par le système trois-points 11 du tracteur.

Ce dispositif d'accouplement, tel qu'illustré en Fig. 4, présente de gros avantages, d'une part, en raison de ce qu'il est robuste et qu'il permet ainsi de tracter des châssis porte-outils quel que soit leur poids, mais, d'autre part, et surtout, en ce qu'il peut être accouplé au tracteur et au châssis sans aucun effort, puisque toutes les opérations d'attelage, et notamment celle consistant à accoupler la potence au châssis porte-outils, se font en se servant du système de relevage propre au tracteur, sans intervention manuelle. Ainsi, le préposé peut passer aisément de la position de travail (Fig. 2) à la position de transport (Fig. 3) sans avoir recours à une aide manuelle ou mécanique autre que celle du tracteur.

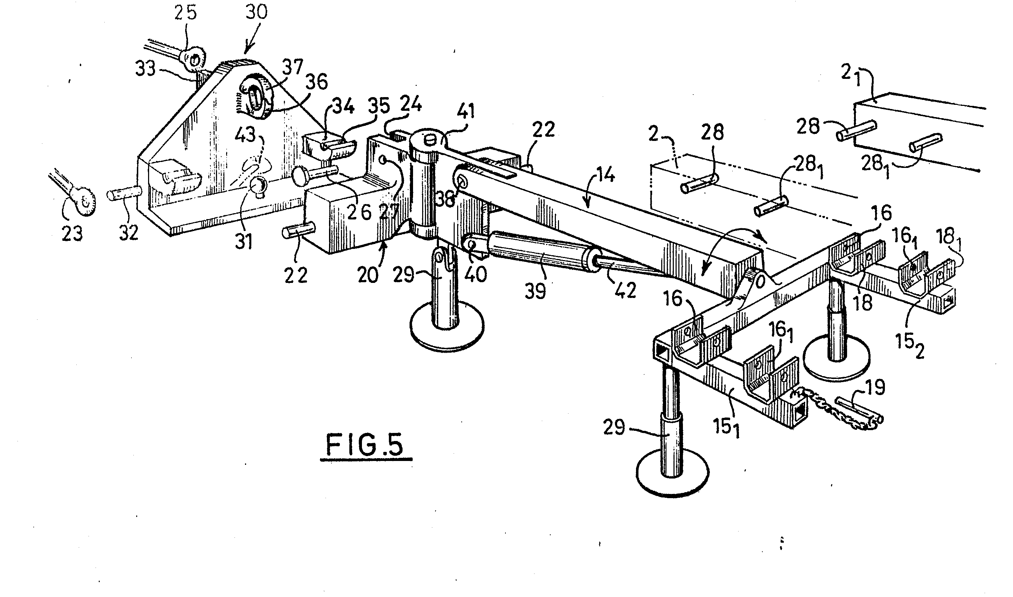

Suivant la variante de réalisation, telle qu'illustrée en figure 5, le châssis porte-outils selon l'invention peut être utilisé en corellation avec une platine d'attelage automatique 30 susceptible d'être insérée entre l'attelage trois points du tracteur et la potence d'attelage 14, cette platine comportant une rotule d'accrochage 31 servant à accoupler le tracteur avec le châssis porte-outils, en position de

travail. Cette platine est réalisée sous la forme d'une pièce triangulaire dont les deux faces latérales sont pourvues d'axes tourillons 32 servant à la fixation des bras d'attelage 23 du système "trois points" du tracteur , la face avant de cette platine comportant par ailleurs une chape 33 pour recevoir l'anneau du bras de relevage 25 du système "trois points" du tracteur rendu solidaire de cette chape, de façon usuelle, par une broche. L'autre face de la platine comporte deux paliers ouverts 34 en forme du berceau, pourvus chacun d'un siège semi-circulaire 35, ces deux paliers étant destinés à recevoir les tourillons 22 de la chape 20. La platine comporte encore un troisième point de fixation constitué par un palier 36, formant avec les deux précédents une disposition triangulaire, ce palier étant susceptible d'être obturé, de façon usuelle, par un secteur mobile de sécurité qui, en se verrouillant, forme un anneau fermé. Ce palier 36 est destiné à venir se loger dans la fente 24 de la chape 20 afin d'y être maintenu par la broche 26 qui sera goupillée.

Le bras principal 14 de la potence d'attelage est articulé sur un axe horizontal 38, et est rendu solidaire, par intermittence, du reste de la chape, par un vérin 39 articulé respectivement en 40 sur l'extrémité avant 41 de la potence et fixé par son autre extrémité 42 sur le bras principal 14.

Les deux bras $15_1$ et $15_2$ de la fourche comportent, enplus des paliers ouverts 16 (fig. 4) deux autres paliers identiques $16_1$ destinés à coopérer avec deux tourillons supplémentaires $28_1$ en saillie sur les faces internes des deux traverses 2 et $2_1$ du châssis porte-outils. Ces paliers $16_1$ comportent, à l'instar des paliers 16, des orifices $18_1$ pour le passage de goupilles de verrouillage 19.

En position de travail, la platine d'attelage automatique 30 qui reste en permanence attelée au système "trois points" du tracteur, est amenée en regard de la platine d'attelage (en position de travail) du châssis porte-outils, de manière à positionner la rotule 31 en regard d'une main ou siège hémisphérique 43 (schématisé en pointillé), cette main étant située sous la platine d'attelage et venant ainsi coiffer la rotule lorsqu'on relève le système "trois points" du tracteur. Lorsque la rotule et la main sont imbriquées l'une dans l'autre, une broche vient, de façon usuelle, verrouiller l'ensemble de façon à éviter que la rotule se dégage de son siège. Cette rotule est parfaitement suffisante pour assurer
un bon attelage du tracteur et du châssis porte-outils tout en permettant
certains débattements de celui-ci en particulier en cas de dévers ou de
dénivellation du terrain.

En position de transport (le tracteur ayant pivoté
de 90° par rapport au châssis porte-outils) la platine d'attelage automatique
est amenée en-dessous de la chape 20, de manière à ce que par le relevage du
système "trois points", l'opérateur amène les paliers 34 sous les axes
tourillons 22 de la chape 20 et fasse pénétrer le palier 36 dans la fente 24
de cette même chape. Il suffit ensuite de verrouiller le palier 36 à l'aide
du secteur de blocage 37 puis d'introduire dans l'orifice 27 de la chape 20
la broche 26 qui sera goupillée afin d'éviter sa sortie. Dans cette position,
si l'opérateur poursuit le relevage du système trois points, celui-ci
entraînera, par l'intermédiaire de la platine d'attelage automatique 30 , la
potence d'attelage jusqu'à ce que ces paliers 16 et $16_1$ viennent se positionner en regard des tourillons 28 et $28_1$. Cette opération de positionnement
est facilitée par la manoeuvre hydraulique du vérin qui permettra à la
potence 14, s'articulant sur l'axe 38, de se positionner sur le même plan
que les traverses 2 et $2_1$ sur lesquelles sont fixés les tourillons 28 et $28_1$.
Afin d'éviter que la potence d'attelage "se casse" autour de l'axe 38, le
vérin 39 sera, pendant cette opération de relevage, mis sous tension de
manière à maintenir le bras principal 14 sur le même plan que les traverses
2 et $2_1$. Ultérieurement, c'est-à-dire après accouplement des tourillons 28 et
$28_1$ avec leurs paliers respectifs 16 et $16_1$, l'opérateur pourra relâcher la
pression dans le vérin 39 ou le démonter s'il le souhaite.

Il est également possible, dans le cas où le châssis
porte-outils ne comprendrait qu'une seule traverse, de réaliser la potence
d'attelage 14 sous la forme d'une simple barre rectiligne dont l'une des
extrémités pourrait comporter sous sa face inférieure, une cuiller ou main 43,
similaire à celle illustrée sur le dessin annexé, l'autre extrémité étant
pourvue dans ce cas, sur sa face supérieure, de paliers identiques aux paliers
16 ou $16_1$, afin de recevoir les deux paires de tourillons 28 et $28_1$ qui, dans
ce cas, feraient saillie sur les deux faces latérales de l'unique traverse.
Cette potence d'attelage toute simple pourrait ainsi être manuellement
accouplée à la traverse du châssis porte-outils, son autre extrémité étant alors
attelée à la rotule 31 de la platine d'attelage automatique fixée au système
"trois points" du tracteur, ce qui suffira largement à l'entraînement du châssis
sur route.

REVENDICATIONS

1°) - Châssis porte-outils destinés au travail ou au traitement du sol, du type comprenant des longerons assemblés entre eux par des traverses de position réglable, au moins l'une de ces traverses comportant des systèmes d'attelage pour la fixation suspendue d'outils standards susceptibles de prendre au moins deux positions, l'une de travail, en contact avec le sol, l'autre escamotée pour le déplacement du châssis sur route, ledit châssis étant supporté par des roues orientables et pouvant être accouplé à un tracteur dans deux plans orthogonaux, l'un perpendiculaire aux traverses correspondant au sens de déplacement du châssis en position de travail, l'autre dans le plan des traverses correspondant à la position de transport, un dispositif d'accouplement amovible étant dans ce dernier cas prévu pour atteler les traverses au tracteur, châssis caractérisé en ce que le dispositif d'accouplement est constitué d'une potence comprenant un bras principal (14) pourvu d'une chape articulée (20) comportant des moyens d'attelage (22) avec le système de relevage du tracteur, ce bras étant prolongé par une fourche dont chacune des branches ($15_1$-$15_2$) comporte des paliers (16 ou $16_1$) ouverts vers le haut dans lesquels sont susceptibles de venir se loger des tourillons (28 ou $28_1$) fixés aux extrémités de chacune des traverses ($2$-$2_1$), (ou inversement), ces paliers (16 et $16_1$) comportant des orifices (18) pour le passage de broches de verrouillage (19).

2°) - Châssis porte-outils selon la revendication 1, caractérisé en ce que la fourche ($15_1$-$15_2$) est montée oscillante, dans un plan transversal, sur l'axe ($14_1$) passant par le plan longitudinal du bras principal (14), l'extrémité ($14_1$) de ce bras étant cylindrique et servant d'axe d'oscillation à la fourche.

3°) - Châssis porte-outils selon la revendication 1, caractérisé en ce que la chape (20) de la potence comporte deux doigts latéraux (22) pour la fixation des deux bras de relevage (23) du tracteur (T) et une fente (24) pour la fixation du troisième bras de relevage (25) réglable en longueur.

4°) - Châssis porte-outils selon la revendication 2, caractérisé en ce que la chape (20) est montée articulée sur un axe vertical (21) traversant l'extrémité ($14_2$) du bras de la potence opposée à la fourche ($15_1$-$15_2$).

5°) - Châssis porte-outils selon la revendication 1, caractérisé en ce que les paliers ouverts $(15-16_1)$ sont constitués de tronçons de profilés à section en U, soudés sur la face supérieure de chacune des deux branches $(15_1-15_2)$ de la potence, l'écart entre lesdites branches étant sensiblement égal à celui des deux traverses $(2-2_1)$ du châssis, les tourillons $(28-28_1)$ étant soudés sur la face latérale desdites traverses pour être situés sur le trajet des paliers lors du déplacement ascensionnel de la potence lorsqu'elle est relevée par le système trois points du tracteur.

6°) - Châssis porte-outils selon l'une quelconque des revendications 1 à 5, caractérisé en ce que la potence est pourvue de pieds (29), escamotables par basculement, rétraction ou similaires.

7°) - Châssis porte-outils selon la revendication 1, caractérisé en ce qu'il comporte deux roues arrière $(8-8_1)$ orientables pour supporter le châssis en position de travail et une roue avant (12), devenant roue arrière pour supporter le châssis en "position route" lorsqu'il est semi-porté, c'est-à-dire accouplé et relevé par le tracteur par le jeu de la potence.

8°) - Châssis porte-outils selon l'une quelconque des revendications 1 à 7, caractérisé en ce que les traverses $(2-2_1)$ comportent des systèmes d'attache trois points (4) pour la fixation de séries d'outils standards différents mais de fonctions complémentaires.

9°) - Châssis porte-outils selon l'une quelconque des revendications 1 à 8, caractérisé en ce qu'il comprend, une platine d'attelage automatique (30) fixée sur l'attelage trois points (23-25) du tracteur, celle-ci comportant d'une part, une rotule (31) d'accrochage avec la platine d'attelage du châssis et, d'autre part, trois points de fixation (34 - 36) pouvant être attelés respectivement aux deux axes tourillons (22) de la chape (20) de la potence (14) et à l'axe amovible goupillé (26) de cette même chape (20).

10°) - Châssis porte-outils selon la revendication 9, caractérisé en ce que la platine d'attelage automatique (30) comporte deux axes latéraux (32) sur lesquels se fixent les deux bras d'attelage (23) du "trois points" du tracteur et une chape (33) pour la fixation du bras de relevage (25) de ce "trois points", la face avant de cette même platine (30) comportant deux paliers ouverts (34) en forme de berceau (35), pour recevoir les axes tourillons (22) de la potence d'attelage (14) et un anneau d'accrochage (36) doté d'une fermeture de sécurité (37) (connue), ces trois points de fixation formant une disposition triangulaire et la rotule d'accrochage (31) étant située à égale distance des deux paliers (34).

11. Châssis porte-outils selon la revendication 9, caractérisé en ce que le bras principal (14) de la potence est articulé sur la chape (20) par un axe horizontal (38) et est rendu solidaire en mouvement de celle-ci par un vérin (39).

12. Châssis porte-outils selon l'une quelconque des revendications 1 à 11, caractérisé en ce que le bras principal (14) de la potence est constitué, lorsque ledit châssis ne comprend qu'une seule traverse (2), d'une simple barre dont l'une des extrémités est pourvue d'un siège (43) en forme de cuiller, pour recevoir la rotule (31) de la platine d'attelage automatique (30), l'autre extrémité comportant, sur sa face supérieure, des paliers ouverts pour recevoir les quatre tourillons $(28-28_I)$ de la traverse, situés par paire sur chaque face latérale de ladite traverse.

0072324

1/4

FIG.1

FIG.3

FIG.2

FIG.4

3/4

00Ĵ2324

FIG.5

0072324

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| D,A | FR-A-2 388 475 (GRUDET) | | A 01 B 51/04 A 01 B 73/00 |
| A | US-A-4 060 259 (HEFFERD) | | |
| A | FR-A-2 321 828 (VAN DER LELY) | | |
| A | DE-A-2 219 971 (GEBR. EICHER TRAKTOREN- UND LANDMASCHINEN WERKE) | | |
| A | GB-A- 919 122 ·(ALVAN BLANCH DEVELOPMENT COMPANY LTD.) | | |
| A | GB-A- 833 499 (MASSEY-HARRIS-FERGUSON LTD.) | | |
| A | FR-A-2 332 690 (S.A. HERRIAU) | | |

DOMAINES TECHNIQUES RECHERCHES (Int. Cl. ³)

A 01 B

Le présent rapport de recherche a été établi pour toutes les revendications

| Lieu de la recherche | Date d'achèvement de la recherche | Examinateur |
|---|---|---|
| LA HAYE | 21-10-1982 | VERDOODT S.J.M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou apres cette date
D : cité dans la demande
L : cité pour d'autres raisons

& : membre de la même famille, document correspondant

OEB Form 1503 03 82